# EUROPEAN PATENT SPECIFICATION

(11) **EP 2 222 784 B1**
(45) Date of publication and mention of the grant of the patent: **27.01.2016**
(21) Application number: 08852585.2
(22) Date of filing: 14.11.2008
(51) Int. Cl.: C08L 27/06, C08J 5/18, C08L 33/06, C08L 75/04

(54) **PLASTICIZED VINYL CHLORIDE POLYMER FILM WITH INCREASED MOISTURE VAPOR PERMEABILITY AND STATIC DISSIPATIVE PROPERTIES**
PLASTIFIZIERTES VINYLCHLORIDPOLYMERFILM MIT ERHÖHTER WASSERDAMPFDURCHLÄSSIGKEIT UND STATISCH DISSIPATIVEN EIGENSCHAFTEN
FILM DE POLYMÈRE DE CHLORURE DE VINYLE PLASTIFIÉ AVEC DES PROPRIÉTÉS ACCRUES DE PERMÉABILITÉ À LA VAPEUR D'EAU ET DE DISSIPATION STATIQUE

(30) Priority: 21.11.2007 US 989460 P
(43) Date of publication of application: 01.09.2010
(73) Proprietor: Lubrizol Advanced Materials, Inc., Cleveland, OH 44141-3247 (US)
(72) Inventor: ANDERLE, Gary, A., North Olmsted Ohio 44070 (US); LUBNIN, Alexander, V., Copley Ohio 44321 (US); SNOW, George, E., Medina Ohio 44256 (US); VARN, Ronald, D., Canton Ohio 44709 (US)
(74) Representative: von Kreisler Selting Werner - Partnerschaft von Patentanwälten und Rechtsanwälten mbB
(86) International application number: PCT/US2008/083552
(87) International publication number: WO 2009/067384

(56) References cited:
- EP-A- 0 431 634
- EP-A- 0 466 061
- GB-A- 810 385
- US-A- 3 792 009
- US-A- 4 088 725
- US-A- 4 661 547
- US-A- 5 574 104

## Description

### FIELD OF INVENTION

The invention relates to a plasticized vinyl chloride polymer (PVC) film having an elevated moisture vapor transmission rate and/or electrostatic dissipative properties. The incorporation of a hydrophilic polyurethane into the vinyl chloride polymer imparts moisture vapor permeability and/or electrostatic dissipative properties to the vinyl chloride polymer.

### BACKGROUND OF THE INVENTION

U.S. Patent No. 4,983,662 relates to an aqueous selfcrosslinkable coating composition comprising an aqueous dispersion of at least one polyurethane and having hydrazine (or hydrazone) functional groups and carbonyl functional groups disposed therein to provide a selfcrosslinkable reaction, in which the polyurethane polymer takes part via azomethine formation during and/or after film formation.

U.S. Patent No. 4,190,566 relates to non-ionic, water-dispersible polyurethanes having a substantially linear molecular structure and lateral polyalkylene oxide chains having about 3 to 30% by weight of lateral polyalkylene oxide polyether chains. The chains consist of about 40-95% ethylene oxide units and 5-60% certain other alkylene oxide units selected from the group consisting of propylene oxide, butylene oxide and styrene oxide.

U.S. Patent No. 4,092,286 relates to water-dispersible polyurethane elastomers having a substantially linear molecular structure, characterized by (a) lateral polyalkylene oxide units of from about 0.5 to 10% by weight, based on the polyurethane as a whole and (b) a content of =N⁺=, --COO⁻ or --SO₃⁻ groups of from about 0.1 to 15 milliequivalents per 100 g.

U.S. Patent No. 5,153,259 discusses aqueous dispersions of polyurethanes. In column 9, line 54, through column 10, line 47, the authors discuss polymerizing various vinyl monomers in the presence of the aqueous dispersions of polyurethanes. In Example 15, column 15, the authors polymerize butyl acrylate and vinylidene chloride in the presence of a polyurethane dispersion.

U.S. Patent No. 6,794,475 relates to blends of 1) polymers, in latex or dispersion form of a) a least one reactive macromer of at least one alkylene oxide having at least one functional group capable of free-radical transformation, b) optionally other ethylenically unsaturated monomers having at least one carboxylic acid group, c) optionally other co-monomers, and 2) one or more other polymers.

U.S. Patent No. 6,897,281 discloses breathable polyurethanes having an upright moisture vapor transmission rate (MVTR) of more than about 500 g/m²/24 hrs.

U.S. Patent No. 5,130,402 describes coating compositions comprising blocked urethane prepolymers and curatives and PVC plastisols containing the blocked urethane prepolymers and curatives.

U.S. Patent No. 5,314,942 discloses polymer dispersions containing a vinyl polymer and a nonionic water-dispersible polyurethane having pendant polyoxyethylene chains.

U.S. Patent No. 6,498,210 discloses thermoplastic compositions for making a liquid impermeable and moisture vapor permeable layer comprising a thermoplastic layer and suitable hydrophilic plasticizers.

U.S. Patent No. 7,358,295 describes an anti-static polymer composition comprising a thermoformable, moldable, hybrid urethane-vinyl polymer compositions.

WO-A- 2004/014445 discloses polymeric compositions for making a liquid impermeable, moisture vapour permeable, layer from thermoplastic polymers and suitable hydrophilic plasticizers which are covalently bonded to said thermoplastic polymers.

### SUMMARY OF THE INVENTION

Vinyl chloride polymer (PVC) compositions with improved moisture vapor transmission rates and static dissipative properties are described. The moisture vapor permeability and static dissipative properties are imparted from the incorporation of high moisture vapor transmission hydrophilic polymer compositions. These PVC compositions are often plasticized to result in flexible PVC compositions with improved moisture vapor transmission. The hydrophilic polymer(s) are characterized by their poly(ethylene oxide) or another polar component which imparts the moisture vapor transmission. The hydrophilic polymer can be incorporated into the PVC during the polymerizations of the PVC, after polymerization of the PVC but before drying, during formulation of the PVC, or as a post-add to the final PVC formulation. The hydrophilic polymer can vary widely in molecular weight.

### DETAILED DESCRIPTION OF THE INVENTION

Various blends of vinyl chloride polymer (PVC) and a hydrophilic polymer are described to enhance the moisture vapor permeability and static dissipative properties of the vinyl chloride polymer composition, typically in film form. Vinyl chloride polymers, optionally plasticized, are used in many applications to provide inexpensive articles with good resistance to liquid water, UV (outdoor exposure), and fire. Examples include vinyl house siding, vinyl wall coverings, wallpaper, vinyl flooring, supported and unsupported dipped vinyl goods such as gloves, and waterproof coatings on canvas and other industrial goods. A problem for many vinyl chloride goods is that they are so impermeable to water that moisture can become trapped on one side of the vinyl chloride article. This leads to high humidity on that side of the article, discomfort to the wearer (gloves or clothing applications), and potentially mildew and mold growth in construction applications. If vinyl chloride polymer could be made to maintain liquid water barrier properties and have increased (adjustable) moisture vapor permeability, it could be used in more demanding applications such as layers in clothing, roofing, and in damp environments where it would be desirable for moisture vapor to transfer through the film.

Similarly, PVC and some related polymers (acrylates and polyurethanes) are used in films and other shapes in many applications where static dissipative properties are necessary to minimize or prevent static discharges and/or accumulation of charge in the PVC, acrylate, and/or urethane articles or in dissimilar articles brought near or in contact with the PVC, acrylate, or urethane articles. The hydrophilic polymers of this disclosure are also useful in articles made from acrylates, PVC, and urethanes that need static dissipative properties. Such uses are in clean rooms, electronics assembly areas, doorways, flooring, packing materials, etc. The articles may be softwall plastic curtains (such as for clean rooms, warehouses, etc., where one wants to block air and dust travel but may permit entry of totes, skids, or other raw material/ finished material containers). The articles may be mats or flooring such as those in cleanrooms or static dissipative assembly areas. The articles may be packaging, display components, electronic housing, thermoformed packaging, cleaning swab heads, foamed packaging (such as foamed packing peanuts), urethane foam, carpet backing, urethane sheets or molded articles, etc.

The increased moisture vapor transmission rates of the present invention are conveniently referred to as the vinyl chloride polymer's moisture vapor transmission rate because the blends contain repeating units from vinyl chloride monomer, and the applications of the polymer compositions are those typically dominated by vinyl chloride polymer, which is optionally plasticized.

Definitions. Unless otherwise indicated, the following terms have the following meanings:

As used herein, the term "wt.%" means the number of parts by weight of monomer per 100 parts by weight of polymer on a dry weight basis, or the number of parts by weight of ingredient per 100 parts by weight of specified composition.

As used herein, the term "molecular weight" means number average molecular weight.

"Bulk polymerization" means the formation of polymer from substantially undiluted monomers. Incidental amounts of solvents, coalescents, plasticizers and/or water may also be present. Further description is given in "Bulk Polymerization", Vol. 2, pp. 500-514, Encyclopedia of Polymer Science and Engineering, © 1989, John Wiley & Sons, New York.

"Solution polymerization" means a polymerization technique in which both the monomers and resultant polymer are substantially soluble in a diluent (e.g., organic solvents, coalescents, plasticizers and/or water) that is also present. It is described in "Solution Polymerization", Vol. 15, pp. 402-418, Encyclopedia of Polymer Science and Engineering, © 1989, John Wiley & Sons, New York.

"Dispersion polymerization" means a polymerization technique in which polymerization of the monomers is at least initially carried out by bulk or solution polymerization, with the reaction system thereafter being emulsified or dispersed in an aqueous medium. It includes polymerization reactions in which polymerization is carried out to substantial or total completion before the bulk or solution polymerization system is dispersed in the aqueous medium. It is also known as secondary dispersion.

"Emulsion polymerization" means a polymerization technique in which the monomers are emulsified in an aqueous medium containing a water-soluble initiator. Polymerization occurs predominantly in micelles formed by surfactant and not in the initially formed monomer droplets. The latter serve merely as a reservoir of monomers which diffuse out to find micelles and swell them. This mechanism produces polymer particles which are significantly smaller than original monomer droplets.

"Polymer" means a chemical substance consisting of one or more repeating units characterized by the sequence of one or more types of monomer units and comprising a simple weight majority of molecules containing at least 3 monomer units which are covalently bound to at least one other monomer unit or other reactant. Such molecules can be distributed over a range of molecular weights and can be characterized by number-average and/or weight-average molecular weights and polydispersity index.

"(Meth)acrylate" means either acrylate, methacrylate or both, while "(meth)acrylic" means either acrylic, methacrylic or both.

"Reaction mass in which the polymer is formed" and "reaction mass used to form the polymer by bulk polymerization or solution polymerization" refers to the bulk or solution polymerization reaction system in which the polymers of this invention are formed, whether before polymerization has begun, during polymerization or after polymerization has been completed. It is composed of the monomers being polymerized, other ingredients involved in the polymerization reaction such as initiators, catalysts, chain transfer agents and the like, as well as diluents normally included in solution polymerization systems such as solvents, coalescents and plasticizers.

"Suspension polymerization" means a polymerization technique in which the monomers, normally together with an organic-soluble initiator, are first emulsified in an aqueous medium and thereafter the monomers are caused to polymerize. Because an organic-soluble initiator is used, polymerization occurs throughout the bodies of the emulsified monomer droplets rather than in micelles, as in the case of emulsion polymerization. The result is that the polymer particles formed are typically larger than the polymer particles formed by emulsion polymerization.

Vinyl Chloride Polymer. Vinyl chloride polymers can be prepared by any processes known in the art. Desirably, the vinyl chloride polymer comprises at least 50, in one embodiment at least 75 and in another embodiment at least 85 weight percent repeating units from vinyl chloride monomer. The residual 0-15, or 0-25 or 0-50 weight percent of repeating units can be selected from a variety of free radically polymerizable ethylenically unsaturated monomers. It is intended that the definition of vinyl chloride polymer(s) includes copolymers. The co-polymerizable ethylenically unsaturated monomers can include acrylic and substituted acrylic monomers, for example, acrylic and methacrylic acid; acrylonitrile; alkyl acrylates or alkyl (alk) acrylates such as methyl acrylate, ethyl acrylate, butyl acrylate, isobutyl acrylate, 2-ethylhexyl acrylate, various methacrylates; olefins such as ethylene; acrylamide; methacrylamide; N-methylolacrylamide; vinyl esters; vinyl ethers; vinyl ketones; vinylidene chloride and heterocyclic vinyl compounds.

The vinyl chloride polymer may be made by any of the free radical polymerization process, e.g., dispersion, emulsion, suspension, etc. The vinyl chloride polymer may be prepared in the presence of other chemicals or polymers, e.g., surface active agents, initiators, polymers, etc. The vinyl chloride polymer may be treated post-polymerization by grafting with other chemicals, irradiation, or otherwise modified. The preparation and use of vinyl chloride polymer is set forth in a review article titled "Vinyl Chloride Polymers, Polymerization" by M. J. Bunten in the Encyclopedia of Polymer Science and Engineering, 2nd Edition, Vol. 17, p. 295-376, ©1989 John Wiley & Sons.

Definition of Hydrophilic Polymer. According to the present invention, the hydrophilic polymer is characterized as a hydrophilic polyurethane. A common characteristic of hydrophilic polymers in this application is the presence of hydrophilic segments of repeating units from polymerizing hydrophilic monomers, such as ethylene oxide somewhere in the hydrophilic polymer. The remainder of the hydrophilic polymer (i.e., the non-ethylene oxide portion) may be somewhat hydrophobic, even though the name applied is hydrophilic polymer.

Hydrophilic polymers in this application comprise hydrophilic polymers with water attracting poly(ethylene oxide) segments (PEO which is also called PEG (meaning poly ethylene glycol)). While the poly(ethylene oxide) is a necessary component, and we provide ranges on the amount of PEO, poly(propylene oxide) segments may also be present. Poly(ethylene oxide) copolymers with poly(propylene oxide) are commercially available and are a desirable way to incorporate the poly(ethylene oxide) into the hydrophilic polymer(s). While not wishing to be bound by a theory of phase separation between hydrophilic segments such as poly(ethylene oxide) segments and the rest of the vinyl chloride polymer composition, the poly(ethylene oxide) segments, when of sufficient molecular weight, are believed to phase separate from the rest of the components in the vinyl chloride polymer composition and form poly(ethylene oxide) rich domains, which are hydrophilic and can transport moisture through a polymer film containing the poly(ethylene oxide) segments if they (hydrophilic segments) form hydrophilic polymer rich interconnected channels.

At least three different types of attachments of poly(ethylene oxide) segments to a hydrophilic polymer are possible. These poly(ethylene oxide) segments can be in (a) poly(alkylene oxide) side-chain units (implying that the chains extend outward from the hydrophobic polymer backbone). Poly(ethylene oxide) can be b) bound within the hydrophilic polymer chain such that at least two ends of the poly(ethylene oxide) are chemically bonded to the other repeating units of the polymer (this is called in chain). The poly(ethylene oxide) can be c) the last repeating unit of a hydrophilic polymer (this is called a terminal poly(ethylene oxide). Terminal poly(ethylene oxide) on the hydrophilic polymer may have one non-reactive end (e.g., alkoxy capped so it lacks a reactive hydroxyl or amine group) or may have a non-reacted hydroxyl or amine group. Reactive is used in the previous paragraph to mean reactive with isocyanate groups.

Desirably, the ethylene oxide repeat units are present at concentrations of at least 5, 10, 25, 35 or 50 parts by weight per 100 parts by weight of the hydrophilic polymer. The poly(ethylene oxide) units of the hydrophilic polymer are present in an amount of at least 2, desirably, in an amount of 3, 5, 10, 15, 25, or 30 parts by weight per 100 parts by weight of vinyl chloride polymer in the final blend of vinyl chloride polymer(s) with hydrophilic polymer. At least 50 or, desirably, 80 wt.% of the total ethylene oxide repeat units are in oxyalkenyl blocks (segments of the polymer) of 500 to 10,000 number average molecular weight. In another embodiment, the blocks have a number average molecular weight of 500 to 5,000 and in yet another embodiment from 500 to 3,000 g/mole. Lower molecular weight blocks of alkylene oxide type oligomers may be present for other purposes in the polyurethane. For the purpose of this definition, a block or segment is defined as a portion of the hydrophilic polymer that is derived from oxyalkylene chain or condensation polymerizations and is therefore entirely repeat units characteristic of oxyalkylene polymerization rather than urethane reactions, vinyl polymerization, or polyester type condensation reactions. The molecular weights of these PEO blocks or segments would be derived from and highly correlate with the molecular weight of the poly(alkylene oxide) chains used to make the hydrophilic polymer.

It is desirable that the hydrophilic polymer be added in amounts from about 2 to about 40 parts by weight per one hundred parts by weight of the base polymer (vinyl chloride), and in one embodiment from about 5 to about 35 parts by weight and in a second embodiment from about 5 to about 25 or 30 parts by weight.

In one embodiment, (particularly when the hydrophilic polymer is added as a dispersion in water) using side-chain poly(ethylene oxide) is preferred. In that embodiment, desirably at least 5, 10, 15, 25, 35, 50 or 80 weight percent of the total ethylene oxide repeating units are in side-chains, as opposed to terminal poly(ethylene oxide) or in chain poly(ethylene oxide) in the hydrophilic polymer. In another embodiment, using side-chain and/or terminal poly(ethylene oxide) is preferred. In that embodiment, desirably at least 5, 10, 15, 25, 35, 50 or 80 weight percent of the total ethylene oxide repeating units are in combined side-chains and terminal chains, as opposed to in chain poly(ethylene oxide) in the hydrophilic polymer.

Apart from PEO, other hydrophilic polymers can impart moisture permeability by incorporating them into the side chain, main chain and/or end groups of a polymer. Suitable monomers resulting in hydrophilic polymers are listed in the section below titled "Polar and Hydrophilic Monomers and Components". The routes of their incorporation include "living" or controlled polymerizations and are known to those skilled in the art.

Topology/architecture of the subject of the present invention when utilizing poly(ethylene oxide) as the hydrophilic segments can be schematically represented by the following charts: 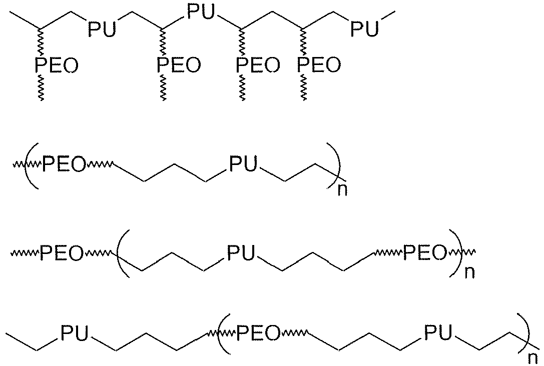 or 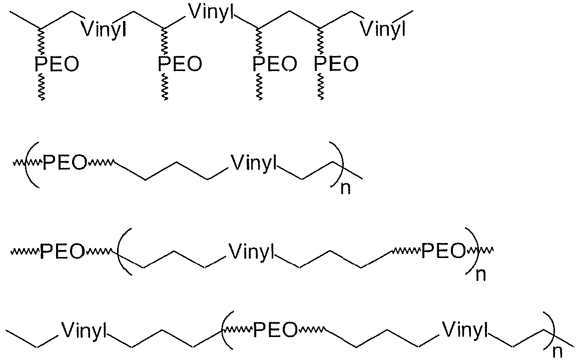 where:
PU = fragment comprised of reaction product of di and other polyisocyanates reacted with polyols and/or polyamine species to create a polyurethane segment.
Vinyl = fragment comprised of any free-radically polymerizable monomeric units such as acrylic, methacrylic, vinyl, styrenic, nitrile and the like well known to those skilled in the art, or their sequence of any length.
PEO = fragment containing ethylene oxide unit or its sequence of any length or any other hydrophilic fragment.
n = 1, 2, 3, etc.

These topological elements can be used in any combinations including star-shaped architectures.

Hydrophilic Polyurethanes. Hydrophilic polyurethane for the purpose of this application includes a) poly(ethylene oxide) in one or more possible forms and b) 2 or more linkages characterized as derived from reacting an isocyanate group with a hydroxyl or amine group. In some embodiment, it is desirable that only one end of the poly(ethylene oxide) is directly attached to the polymer and the other end is more mobile and is in essence dangling from the polymer (these were earlier described as side-chain or terminal PEO). A polyurethane can be branched such that it has more than two termini, making it possible to have more than two terminal poly(ethylene oxide) blocks. Poly(ethylene oxide) may be manufactured such that one end of the poly(ethylene oxide) chain is not capable of chemically bonding into a polyurethane (non-reactive end) while the other (preferably distal) end of the poly(ethylene oxide) chain has two or more reactive hydroxyl or amine groups that can incorporate into the polyurethane. One such commercial material is Tegomer™ D-3403 available from Degussa-Goldschmidt. Such side-chain poly(ethylene oxide) and its effect on moisture vapor transmission are shown in U.S. Patent No. 6,897,281 for its description of side-chain poly(ethylene oxide). Others sources or synthesis methods for poly(ethylene oxide) containing species that form lateral side-chains from the polyurethane backbone as disclosed in WO-A-2003/046036. Incorporation of such poly(ethylene oxide) with one distal non-reactive end and two proximal reactive groups at the other PEO end results in a side-chain poly(ethylene oxide) along the polyurethane backbone.

A preferred process for making such hydrophilic polyurethanes with side chain poly(ethylene oxide) chains comprises: reacting to form an isocyanate-terminated prepolymer (1) at least one polyisocyanate having an average of about two or more isocyanate groups; (2) at least one active hydrogen-containing compound comprising (a) poly(alkylene oxide) in an amount comprising 12 wt.% to 80 wt.% of said polyurethane, and at least 50 wt.% of said alkylene oxide groups are ethylene oxide. It is also preferred in one embodiment that poly(alkylene oxide) main-chain (in-chain) units be present. It is also preferred in one embodiment that at least one other active hydrogen-containing compound not containing poly(alkylene oxide) side-chain units be present in said hydrophilic polyurethane. It is desirable in one embodiment that at least one compound having at least one crosslinkable functional group is present in said hydrophilic polyurethane.

The isocyanate-terminated prepolymer can be diluted and dispersed into water, dispersed in a volatile solvent, polymerized (further chain extended) in plasticizer solution or water, or diluted with a suitable plasticizer. It can then be further functionalized, chain extended, or remain isocyanate terminated. The lower molecular weight of the prepolymer versus a chain extended polyurethane would make it a lower viscosity material in plasticizer or solvent facilitating subsequent simple blending with vinyl chloride polymer. In some applications, residual isocyanate groups may help adhesion to substrates, but residual isocyanate groups might be involved in non-intended chemical reactions if exposed to moisture or other isocyanate reactive materials during storage. This might cause changes in the molecular weight and other properties of the polyurethane. The isocyanate terminated prepolymer (optionally end capped or chain extended) can be mixed with the vinyl chloride monomer or polymer, and optionally plasticizer and/or solvent.

Alternatively, to using the isocyanate prepolymer as a low molecular weight hydrophilic material, it may be dispersed in water, and optionally chain extended by reaction with at least one of water, inorganic or organic polyamine having an average of about 2 or more primary and/or secondary amine groups, polyalcohols, or combinations thereof (this is further explained in U.S. Patent No. 6,897,281). Thereafter, the dispersion in water can be mixed with vinyl chloride monomer or vinyl chloride polymer and that material can be further processed into one of the embodiments of this disclosure.

Additional embodiments for processes for making the hydrophilic polyurethane include making similar prepolymers or chain extended polyurethane using ethylene oxide polymers that are monoalkoxy and monohydroxy terminated or if the stoichiometry of the reaction groups is controlled to prevent chain extension the isocyanate groups can be reacted with di or polyhydroxy polymers and thereby be terminated. Using monohydroxyl terminated or polyhydroxyl terminated polymers are less likely to result in side chain poly(ethylene oxide) but do result in hydrophilic polyurethanes that promote moisture vapor transmission. In one embodiment, it is preferred to use relatively small amounts of urethane forming components (di and polyisocyanates and optionally in-chain polyols and amines) to create a polyfunctional isocyanate functionalized polymer core that can be capped with several mono-hydroxyl functionalized poly(ethylene oxide) segments. In another embodiment, a tri or higher functionality isocyanate could be directly reacted with several hydroxyl or amine terminated oligomers containing poly(ethylene oxide) segments. The hydroxyl or amine terminated oligomers could contain other repeating units, such as propylene oxide, or could comprise mostly ethylene oxide repeating units. The hydroxyl or amine terminated oligomers could be alkoxy capped if chain extension or chain coupling reactions were to be avoided. These would create a relatively low molecular weight hydrophilic urethane prepolymers that could be used as the hydrophilic polymer.

At this point, it would be desirable to discuss molecular weights of the hydrophilic polyurethane. If the hydrophilic polyurethane is to be dissolved or highly swollen with a solvent or plasticizer, it would be desirable that the number average molecular weight is from 1,000 to 300,000, in another embodiment from 3,000 to 100,000, and in still another embodiment from 5,000 to 50,000. At these molecular weights, the solution of 5, 10, or 20 wt.% polyurethane in solvent or plasticizer would be fluid even if rather resistant to flow. At higher molecular weights for the hydrophilic polymer the solids content of the blend could be adjusted downward with plasticizers or solvents to facilitate intermixing with the vinyl chloride polymer. Any addition of solvent or plasticizer to the hydrophilic polymer would carry that solvent or plasticizer into the blend with vinyl chloride polymer.

If the hydrophilic polyurethane can be added to the vinyl chloride polymer as a dispersion in water, the intrinsic viscosity of the polyurethane has little effect on the viscosity of the dispersion, as the viscosity of the continuous phase (rather than the dispersed phase) of the dispersion is primarily controlling the viscosity of the dispersion. Thus, a hydrophilic polyurethane of low to very high molecular weight can be utilized when the hydrophilic polyurethane is added to the vinyl chloride polymer as a dispersion of polyurethane in water. Once the hydrophilic polyurethane is added and homogeneously distributed throughout the poly(vinyl chloride), the effect of molecular weight of the hydrophilic polymer is thought to be insignificant on the measured moisture vapor transmission rate.

Optionally, when making dispersions of polyurethane in water, at least one organic solvent or plasticizer is introduced into the reaction mixture at any time during prepolymer formation, and before the prepolymer is optionally dispersed in water. These can reduce the viscosity of the phase to be dispersed, making it easier to shear the polyurethane into very small particles in the dispersed phase. Organic solvents and or plasticizer can also be added to the prepolymer and/or low molecular weight polymer in bulk, plasticized form or in a finished dispersion in water. Vapor permeation properties can further be augmented by the use of hydrophilic plasticizers such as citrates and triethylene glycol esters.

Before continuing with discussion of the preferred process, it is noted that other processes can also be used to manufacture the hydrophilic polyurethanes of the present invention, including but not limited to the following:

Dispersing a prepolymer by shear forces with emulsifiers (external emulsifiers, such as surfactants, or internal emulsifiers having anionic, nonionic and/or cationic groups as part of or pendant to the polyurethane backbone, and/or as end groups on the polyurethane backbone).

Melt dispersion process. An isocyanate-terminated prepolymer is formed, and then reacted with an excess of ammonia or urea to form a low molecular weight oligomer having terminal urea or biuret groups. This oligomer is dispersed in water and chain extended by methylolation of the biuret groups with formaldehyde.

Ketazine and ketimine processes. Hydrazines or diamines are reacted with ketones to form ketazines or ketimines. These are added to a prepolymer, and remain inert to the isocyanate. As the prepolymer is dispersed in water, the hydrazine or diamine is liberated, and chain extension takes place as the dispersion is taking place.

Continuous process polymerization. An isocyanate-terminated prepolymer is formed. This prepolymer is pumped through high shear mixing head(s) and dispersed into water and then chain extended at said mixing head(s), or dispersed and chain extended simultaneously at said mixing head(s). This is accomplished by multiple streams consisting of prepolymer (or neutralized prepolymer), optional neutralizing agent, water, and optional chain extender and/or surfactant.

Reverse feed process. Water and optional neutralizing agent(s) and/or extender amine(s) are charged to the prepolymer under agitation. The prepolymer can be neutralized before water and/or diamine chain extender is added.

With respect to the hydrophilic polyurethane, they can be more accurately described as poly(urethane/urea)s if the active hydrogen-containing compounds are polyols and polyamines. It is well understood by those skilled in the art that "polyurethanes" is a generic term used to describe polymers obtained by reacting isocyanates with at least one hydroxyl-containing compound, amine-containing compound, or mixture thereof. It also is well understood by those skilled in the art that polyurethanes also include allophanate, biuret, carbodiimide, oxazolidone, isocyanurate, uretdione, and other linkages in addition to urethane and urea linkages.

Polyisocyanates. Suitable polyisocyanates have an average of about two or more isocyanate groups, preferably an average of about two to about four isocyanate groups and include aliphatic, cycloaliphatic, araliphatic, and aromatic polyisocyanates, used alone or in mixtures of two or more. Diisocyanates are more preferred.

Specific examples of suitable aliphatic polyisocyanates include alpha, omega-alkylene diisocyanates having from 5 to 20 carbon atoms, such as hexamethylene-1,6-diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, and the like. Polyisocyanates having fewer than 5 carbon atoms can be used but are less preferred because of their high volatility and toxicity. In one embodiment, desirably at least 50 wt.% of the isocyanates incorporated into said hydrophilic polyurethane were aliphatic or cycloaliphatic di and/or polyisocyanates.

Specific examples of suitable cycloaliphatic polyisocyanates include dicyclohexylmethane diisocyanate, (commercially available as Desmodur™ W from Bayer Corporation), isophorone diisocyanate, 1,4-cyclohexane diisocyanate, 1,3-bis-(isocyanatomethyl) cyclohexane, and the like. Preferred cycloaliphatic polyisocyanates include dicyclohexylmethane diisocyanate and isophorone diisocyanate.

Specific examples of suitable araliphatic polyisocyanates include m-tetramethyl xylylene diisocyanate, p-tetramethyl xylylene diisocyanate, 1,4-xylylene diisocyanate, 1,3-xylylene diisocyanate, and the like.

Examples of suitable aromatic polyisocyanates include 4,4'-diphenylmethylene diisocyanate, toluene diisocyanate, their isomers, naphthalene diisocyanate, and the like. Preferred aromatic polyisocyanates are toluene diisocyanate and 4,4'-diphenylmethylene diisocyanate. In one embodiment, it is desirable to have at least 50 wt.% of the isocyanates incorporated into said hydrophilic polyurethane being aromatic di and/or polyisocyanates.

Active Hydrogen-containing Compounds. The term "active hydrogen-containing" refers to compounds that are a source of active hydrogen and that can react with isocyanate groups via the following reaction: - NCO + H -X → -NH-C(=O) -X. Examples of suitable active hydrogen-containing compounds include but are not limited to polyols, polythiols and polyamines.

As used herein, the term "alkylene oxide" includes both alkylene oxides and substituted alkylene oxides having 2 to 10 carbon atoms. The active hydrogen-containing compounds used in this invention have poly(alkylene oxide), optionally as side chains, sufficient in amount to comprise 12 wt.% to 80 wt.%, preferably 15 wt.% to 60 wt.%, and more preferably 20 wt.% to 50 wt.%, of poly(alkylene oxide) units in the final polyurethane on a dry weight basis. In one embodiment, at least 50 wt.%, preferably at least 70 wt.%, and more preferably at least 90 wt.% of the poly(alkylene oxide), optionally in side-chain units, comprise poly(ethylene oxide), and the remainder of the poly(alkylene oxide) units can comprise alkylene oxide and substituted alkylene oxide units having from 3 to about 10 carbon atoms, such as propylene oxide, tetramethylene oxide, butylene oxides, epichlorohydrin, epibromohydrin, allyl glycidyl ether, styrene oxide, and the like, and mixtures thereof.

In one embodiment, (particularly where the hydrophilic polyurethane is dispersed in water before combining with the vinyl chloride polymer) preferably such active hydrogen-containing compounds provide less than 25 wt.%, more preferably less than 15 wt.% and most preferably less than 5 wt.% poly(ethylene oxide) units in the backbone (main chain) based upon the dry weight of final polyurethane, since such main-chain poly(ethylene oxide) units tend to cause swelling of polyurethane particles in the waterborne polyurethane dispersions and also contribute to lower in-use tensile strength of articles made from the polyurethane dispersion. Mixtures of active hydrogen-containing compounds having such poly(alkylene oxide) side chains can be used with active hydrogen-containing compounds not having such side chains. Another source of active hydrogen-containing molecules that have ethylene oxide repeat units are polyalkylene glycols sold as surface active agents (surfactants) or dispersants by companies such as BASF, Huntsman, Ethox, etc. These can be functionalized with various groups such as alkyl phenols, fatty alcohols, oxo alcohol, Guerbet alcohol, etc.

In one embodiment, the polyurethanes of the present invention also have reacted therein at least one active hydrogen-containing compound not having said side chains and typically ranging widely in molecular weight from 50 to 10,000 grams/mole, preferably 200 to 6,000 grams/mole, and more preferably 300 to 3,000 grams/mole. Suitable active-hydrogen containing compounds not having said side chains include any of the amines and polyols described hereafter.

The term "polyol" denotes any molecular weight product having an average of about two or more hydroxyl groups per molecule. Examples of such polyols that can be used in the present invention include higher polymeric polyols such as polyester polyols and polyether polyols, as well as polyhydroxy polyester amides, hydroxyl-containing polycaprolactones, hydroxyl-containing acrylic interpolymers, hydroxyl-containing epoxides, polyhydroxy polycarbonates, polyhydroxy polyacetals, polyhydroxy polythioethers, polysiloxane polyols, ethoxylated polysiloxane polyols, polybutadiene polyols and hydrogenated polybutadiene polyols, polyacrylate polyols, halogenated polyesters and polyethers, and the like, and mixtures thereof. The polyester polyols, polyether polyols, polycarbonate polyols, polysiloxane polyols, and ethoxylated polysiloxane polyols are preferred.

Poly(alkylene oxide) side chains can be incorporated into such polyols by methods well known to those skilled in the art. For example, active hydrogen-containing compounds having poly(alkylene oxide) side chains include diols having poly(ethylene oxide) side chains such as those described in U.S. Patent No. 3,905,929. Further, U.S. Patent No. 5,700,867 teaches methods for incorporation of poly(ethylene oxide) side chains at col. 4, line 35 to col. 5, line 45.

The polyester polyols typically are esterification products prepared by the reaction of organic polycarboxylic acids or their anhydrides with a stoichiometric excess of a diol. Examples of suitable polyols for use in the reaction include poly (glycol adipate)s, poly(ethylene terephtalate) polyols, polycaprolactone polyols, orthophthalic polyols, sulfonated and phosphonated polyols, and the like, and mixtures thereof.

The diols used in making the polyester polyols include alkylene glycols, e.g., ethylene glycol, 1,2- and 1,3-propylene glycols, 1,2-, 1,3-, 1,4-, and 2,3-butylene glycols, hexane diols, neopentyl glycol, 1,6-hexanediol, 1,8-octanediol, and other glycols such as bisphenol-A, cyclohexane diol, cyclohexane dimethanol (1,4-bis-hydroxymethylcyclohexane), 2-methyl-1,3-propanediol, 2,2,4-trimethyl-1,3-pentanediol, diethylene glycol, triethylene glycol, tetraethylene glycol, polyethylene glycol, dipropylene glycol, polypropylene glycol, dibutylene glycol, polybutylene glycol, dimerate diol, hydroxylated bisphenols, polyether glycols, halogenated diols, and the like, and mixtures thereof. Preferred diols include ethylene glycol, diethylene glycol, butylene glycol, hexane diol, and neopentyl glycol.

Suitable carboxylic acids used in making the polyester polyols include dicarboxylic acids and tricarboxylic acids and anhydrides, e.g., maleic acid, maleic anhydride, succinic acid, glutaric acid, glutaric anhydride, adipic acid, suberic acid, pimelic acid, azelaic acid, sebacic acid, chlorendic acid, 1,2,4-butane-tricarboxylic acid, phthalic acid, the isomers of phthalic acid, phthalic anhydride, fumaric acid, dimeric fatty acids such as oleic acid, and the like, and mixtures thereof. Preferred polycarboxylic acids used in making the polyester polyols include aliphatic or aromatic dibasic acids.

The preferred polyester polyol is a diol. Preferred polyester diols include poly(butanediol adipate); hexane diol adipic acid and isophthalic acid polyesters such as hexane adipate isophthalate polyester; hexane diol neopentyl glycol adipic acid polyester diols, e.g., Piothane 67-3000 HNA (Panolam Industries) and Piothane 67-1000 HNA; as well as propylene glycol maleic anyhydride adipic acid polyester diols, e.g., Piothane 50-1000 PMA; and hexane diol neopentyl glycol fumaric acid polyester diols, e.g., Piothane 67-500 HNF. Other preferred polyester diols include Rucoflex® S1015-35, S1040-35, and S-1040-110 (Bayer Corporation).

Polyether diols may be substituted in whole or in part for the polyester diols. Polyether polyols are obtained in known manner by the reaction of (A) the starting compounds that contain reactive hydrogen atoms, such as water or the diols set forth for preparing the polyester polyols, and (B) alkylene oxides, such as ethylene oxide, propylene oxide, butylene oxide, styrene oxide, tetrahydrofuran, epichlorohydrin, and the like, and mixtures thereof. Preferred polyethers include poly(propylene glycol), polytetrahydrofuran, and copolymers of ethylene oxide with propylene oxide.

Polycarbonates include those obtained from the reaction of (A) diols such 1,3-propanediol, 1,4-butanediol, 1,6-hexanediol, diethylene glycol, triethylene glycol, tetraethylene glycol, and the like, and mixtures thereof with (B) diarylcarbonates, such as diphenylcarbonate, or phosgene.

Polyacetals include the compounds that can be prepared from the reaction of (A) aldehydes, such as formaldehyde and the like, and (B) glycols such as diethylene glycol, triethylene glycol, ethoxylated 4,4'-dihydroxy-diphenyldimethylmethane, 1,6-hexanediol, and the like. Polyacetals can also be prepared by the polymerization of cyclic acetals.

The aforementioned diols useful in making polyester polyols can also be used as additional reactants to prepare the isocyanate terminated prepolymer.

Instead of a long-chain polyol, a long-chain amine may also be used to prepare the isocyanate-terminated prepolymer. Suitable long-chain amines include polyester amides and polyamides, such as the predominantly linear condensates obtained from reaction of (A) polybasic saturated and unsaturated carboxylic acids or their anyhydrides, and (B) polyvalent saturated or unsaturated aminoalcohols, diamines, polyamines, and the like, and mixtures thereof.

Diamines and polyamines are among the preferred compounds useful in preparing the aforesaid polyester amides and polyamides. Suitable diamines and polyamines include 1,2-diaminoethane, 1,6-diaminohexane, 2-methyl-1,5-pentanediamine, 2,2,4-trimethyl-1,6-hexanediamine, 1,12-diaminododecane, 2-aminoethanol, 2-[(2-aminoethyl)amino]-ethanol, piperazine, 2,5-dimethylpiperazine, 1-amino-3-aminomethyl-3,5,5-trimethylcyclohexane (isophorone diamine or IPDA), bis-(4-aminocyclohexyl)-methane, bis-(4-amino-3-methyl-cyclohexyl)-methane, 1,4-diaminocyclohexane, 1,2-propylenediamine, hydrazine, urea, amino acid hydrazides, hydrazides of semicarbazidocarboxylic acids, bis-hydrazides and bis-semicarbazides, diethylene triamine, triethylene tetramine, tetraethylene pentamine, pentaethylene hexamine, N,N,N-tris-(2-aminoethyl)amine, N-(2-piperazinoethyl)-ethylene diamine, N,N'-bis-(2-aminoethyl)-piperazine, N,N,N'-tris-(2-aminoethyl)ethylene diamine, N-[N-(2-aminoethyl)-2-aminoethyl]-N'-(2-aminoethyl)-piperazine, N-(2-aminoethyl)-N'-(2-piperazinoethyl)-ethylene diamine, N,N-bis-(2-aminoethyl)-N-(2-piperazinoethyl)amine, N,N-bis-(2-piperazinoethyl)-amine, polyethylene imines, iminobispropylamine, guanidine, melamine, N-(2-aminoethyl)-1,3-propane diamine, 3,3'-diaminobenzidine, 2,4,6-triaminopyrimidine, polyoxypropylene amines, tetrapropylenepentamine, tripropylenetetramine, N,N-bis-(6-aminohexyl)amine, N,N'-bis-(3-aminopropyl)ethylene diamine, and 2,4-bis-(4'-aminobenzyl)-aniline, and the like, and mixtures thereof. Preferred diamines and polyamines include 1-amino-3-aminomethyl-3,5,5-trimethyl-cyclohexane (isophorone diamine or IPDA), bis-(4-aminocyclohexyl)-methane, bis-(4-amino-3-methylcyclohexyl)-methane, ethylene diamine, diethylene triamine, triethylene tetramine, tetraethylene pentamine, and pentaethylene hexamine, and the like, and mixtures thereof. Other suitable diamines and polyamines include Jeffamine® D-2000 and D-4000, which are amine-terminated polypropylene glycols, differing only by molecular weight, and which are available from Huntsman Chemical Company.

Prepolymer Ratios of Isocyanate to Active Hydrogen. The ratio of isocyanate to active hydrogen in the prepolymer typically ranges from 0.5:1 to 3.0:1. In embodiments where further chain extension or residual isocyanate groups are desired, preferably from 1.5: 1 to 2.1:1, and more preferably from 1.7:1 to 2:1. In embodiments where an excess of hydroxyl chains ends are anticipated and molecular weight is limited thereby the NCO:OH ratio would be below 1:1 such as from 0.5:1 to 1:1. In embodiments where the amount of monofunction PEO is controlled to limit molecular weight the ratio could be 1:1 or 0.8:1 to 1.2:1.

Catalysts. The formation of the isocyanate-terminated prepolymer may be achieved without the use of a catalyst. However, a catalyst is preferred in some instances. Examples of suitable catalysts include stannous octoate, dibutyl tin dilaurate, and tertiary amine compounds such as triethylamine and bis-(dimethylaminoethyl) ether, morpholine compounds such as ß,ß'-dimorpholinodiethyl ether, bismuth carboxylates, zinc bismuth carboxylates, iron (III) chloride, potassium octoate, potassium acetate, and DABCO® (diazabicyclo[2.2.2]octane), from Air Products. The preferred catalyst is a mixture of 2-ethylhexanoic acid and stannous octoate, e.g., FASCAT® 2003 from Elf Atochem North America. The amount of catalyst used is typically from 5 to 200 parts per million of the total weight of prepolymer reactants.

Prepolymer Neutralization. Optional neutralization of the prepolymer having pendant carboxyl groups converts the carboxyl groups to carboxylate anions, thus having a water-dispersibility enhancing effect (if the prepolymer is to be dispersed in water). Suitable neutralizing agents include tertiary amines, metal hydroxides, ammonium hydroxide, phosphines, and other agents well known to those skilled in the art. Tertiary amines and ammonium hydroxide are preferred, such as triethyl amine (TEA), dimethyl ethanolamine (DMEA), N-methyl morpholine, and the like, and mixtures thereof. It is recognized that primary or secondary amines may be used in place of tertiary amines, if they are sufficiently hindered to avoid interfering with the chain extension process.

Chain Extenders. As a chain extender, at least one of water, inorganic or organic polyamine having an average of 2 or more primary and/or secondary amine groups, polyalcohols, ureas, or combinations thereof is suitable for use in the present invention. Suitable organic amines for use as a chain extender include diethylene triamine (DETA), ethylene diamine (EDA), meta-xylylenediamine (MXDA), aminoethyl ethanolamine (AEEA), 2-methyl pentane diamine, and the like, and mixtures thereof. Also suitable for practice in the present invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, sulfonated primary and/or secondary amines, and the like, and mixtures thereof. Suitable inorganic amines include hydrazine, substituted hydrazines, and hydrazine reaction products, and the like, and mixtures thereof. Suitable polyalcohols include those having from 2 to 12 carbon atoms, preferably from 2 to 8 carbon atoms, such as ethylene glycol, diethylene glycol, neopentyl glycol, butanediols, hexanediol, and the like, and mixtures thereof. Suitable ureas include urea and its derivatives, and the like, and mixtures thereof. Hydrazine is preferred and is most preferably used as a solution in water. The amount of chain extender typically ranges from 0.5 to 0.95 equivalents based on available isocyanate.

Polymer Branching. A degree of branching of the polyurethane may be beneficial, but is not required. This degree of branching may be accomplished during the prepolymer step or the optional chain extension step. For branching during the optional chain extension step, the chain extender DETA is preferred, but other amines having an average of about two or more primary and/or secondary amine groups may also be used. For branching during the prepolymer step, it is preferred that trimethylol propane (TMP) and other polyols having an average of about two or more hydroxyl groups be used. The branching monomers can be present in amounts up to 5 wt.% of the polymer backbone.

Plasticizers. The hydrophilic polyurethane of the present invention can be prepared in the presence of a plasticizer to lower the viscosity and to help facilitate homogenous mixing with the vinyl chloride polymer. The plasticizer can be added at any time during prepolymer preparation, prior to dispersion in water, or to the polyurethane during or after its manufacture. Plasticizers well known to the art can be selected for use in this invention according to parameters such as compatibility with the particular polyurethane and desired properties of the final composition. A list of plasticizers for such hydrophilic polyurethanes is available in U.S. Patent No. 6,576,702 in column 7, line 40 through column 10, line 15. Flame retardant plasticizers (which are desirable in PVC exposed to sparks or flames) are taught in column 9, line 55, through column 10, line 8. Plasticizers which aid moisture permeability are taught in U.S. 6,498,210 and WO-A-2004/014445.

To the above hydrophilic polymer or the blend of hydrophilic polymer with PVC, optional additives such as as an electrostatic dissipating salt, a lubricant, a defoamer, a surfactant, and/or a wax could be added. Various electrostatic dissipating (ESD) salts can be utilized to further modified resistivity of the present invention such that undesirable electrostatic charges are dissipated and build up of the same is abated. The various ESD salts are desirably inorganic and include cations such as metals from groups 1 and 2 of the periodic table with various anions such as nitrates, sulfates, hydroxyls, halogens, and the like. Preferred salts are lithium compounds such as LiCl, LiNO₃, LiOH, LiCF₃SO₃, Li₂SO₄, lithium (bis)trifluoromethanesulfonimide, and the like with LiNO₃ being preferred. The amount of the ESD salt is such that in combination with the hydrophilic polymer, suitable surface and volume resistivities are achieved. Such amounts generally range from 0.1 or 1.0 to 8 or 10 parts by weight and desirably from 3 or to 6 parts by weight per 100 total dry parts by weight of the hydrophilic polymer. For ease of blending, the dissipative metal salts are sometimes added in an aqueous or polar solution. The use of lithium salts either alone or in association with a solvent is described in detail in U.S. Patent No. 6,140,405.

The static dissipative polymer blends of the present invention can be utilized as a coating, article, or a product. Desired surface resistivities thereof are from 10⁵ to 10¹², and desirably from 10⁸ to 10¹¹ ohm/square at 12% relative humidity. Desired volume resistivities thereof are from 10⁴ to 10 ohm/cm at 12% relative humidity.

Blends with Other Polymers and Polymer Dispersions. The polymers of this invention can be combined with commercial polymers and polymer dispersions by methods well known to those skilled in the art. Such polymers and dispersions include those described in WIPO Publication WO 02/02657 A2, U.S. Patent No. 4,920,176, U.S. Patent. No. 4,292,420, U.S. Patent No. 6,020,438, U.S. Patent No. 6,017,997, and a review article by D. P. Tate and T. W. Bethea, Encyclopedia of Polymer Science and Engineering, Vol. 2, p. 537.

Overview of Applications for Blend(s) of PVC. The blend of vinyl chloride polymer and hydrophilic polymer (optionally with plasticizer for the PVC or the hydrophilic polymer) of the present invention can be processed by methods well known to those skilled in the art (including blending with other polymers and materials) to make coatings and films and other articles having increased (adjustable) moisture vapor transmission rates ("MVTR"). Suitable MVTR values for hydrophilic polymer modified PVC films or coatings are typically an upright cup MVTR (ASTM E-96B) with a nominal 1 oz/yard dry coating/film weight of at least 50 grams/m²/24 hours, preferably at least 100 grams/m²/24 hours, and more preferably at least 150 grams/m²/24 hours grams/m²/24 hours. Suitable MVTR for hydrophilic modified PVC films or coatings in an inverted water cup MVTR (ASTM E-96BW) of at least 200 grams/m²/24 hours, preferably at least 500 or 1000 grams/m²/24 hours, and more preferably at least 2000 grams/m²/24 hours grams/m²/24 hours. The term "breathable" is used herein to denote such excellent MVTR.

Desirably, the MVTR for a film of the hydrophilic polymer (polyurethane or vinyl polymer) in an upright water cup MVTR ASTM E-96B with a nominal 31 g/m (1 oz/yard) dry coating/film weight is at least 200 grams/m²/24 hours, preferably at least 400 grams/m²/24 hours, and more preferably at least 500 or 600 grams/m²/24 hours. Suitable MVTRs for the hydrophilic polymer (polyurethane or vinyl polymer) in an inverted water cup MVTR ASTM E-96BW are at least 200 grams/m²/24 hours, preferably at least 500 or 1000 grams/m²/24 hours, and more preferably at least 2000 or 3000 grams/m²/24 hours grams/m²/24 hours.

The blend of vinyl chloride polymer with hydrophilic polymer (optionally with plasticizer for the PVC or hydrophilic polymer) may be employed as a coating composition, molding composition, dipping solution, extrudable composition, adhesive, etc. It can be applied to a variety of substrates such as fibrous materials. Any fibrous material can be coated, impregnated or otherwise treated with the compositions of the present invention by methods well known to those skilled in the art, including carpets as well as textiles used in clothing, upholstery, tents, awnings, paper, felts, tarpaulins, awnings, protective clothing, gloves, mattress covers, gowns, diapers, pads, and the like. Suitable textiles include fabrics, yarns, and blends, whether woven, non-woven, or knitted, and whether natural, synthetic, or regenerated. Examples of suitable textiles include cellulose acetate, acrylics, wool, cotton, jute, linen, polyesters, polyamides, regenerated cellulose (Rayon), and the like. Examples of vinyl end products with desirable moisture vapor transmission include dipped supported and nonsupported gloves, vinyl upholstery, banners, awnings, water resistant bedding, bedding coverings, protective personal clothing, etc.

It may be applied as a dispersion in a media. It may be applied by brushing, dipping, flow coating, spraying, rolling, etc. It may contain conventional ingredients for plastic articles such as solvents, plasticizers, pigments, dyes, fillers, emulsifiers, surfactants, thickeners, rheology modifiers, heat and radiation stabilization additives, defoamers, leveling agents, anti-cratering agents, fillers, sedimentation inhibitors, U.V. absorbers, antioxidants, flame retardants, etc. It may contain other polymeric species such as additional polymers in the forms of blends, interpenetrating networks, etc.

The vinyl chloride polymer may be in the form of a latex, plastisols, or organosol. These are dispersions of PVC particles in a liquid water or organic media. In the plastisols, the liquid is an organic one that boils at a very high temperature (e.g., having very low vapor pressure at room temperature) so the plasticizer remains with the PVC during the typical lifetime of the PVC article. In the organosols, the continuous phase is a lower boiling organic liquid, which usually does not attack or plasticize the PVC particles. In organosols, the continuous phase is lower boiling point liquids which can be removed by evaporation.

In plastisols, the PVC is the base component typically arbitrarily specified as 100 parts by weight and the other components are specified per 100 parts by weight of the PVC. An extender may be present and it can be from 0 to 40 parts by weight. Heat and light stabilizers can be present in amounts up to 5 parts by weight. Filler can be absent, or present up to 100 parts by weight. Pigment can be absent, or present up to 5 or 30 parts by weight. Volatile diluents can be present up to 10 or 30 parts by weight. Other non-named additives can be present up to 5 parts by weight. Plasticizers for plastisols or PVC in general include C₃-C₁₃ esters of benzoic, phthalic, adipic, azelaic, sebacic, trimellitic, citric, and phosphoric acid. The choice or blend of plasticizer(s) for a particular application depends on the required viscosity, gelation, and fusion characteristics of the desired plastisols and compatibility and resistance to volatilization required. Flame retardant plasticizers (which are desirable in PVC exposed to sparks or flames) are taught in U.S. Patent No. 6,576,702 in column 9, line 55, through column 10, line 8.

Plasticizers for PVC, especially those that maximize moisture vapor permeability, are taught in U.S. Patent No. 6,498,210 and WO-A-2004/014445. For example, volatilization of the plasticizer becomes a large concern in plasticized articles used in automobiles. In these applications in automobiles, volatile plasticizers can be released inside the automobile on hot summer days and fog the interior of glass surfaces. In some embodiments, it is desirable that the at least one plasticizer for the PVC is present in amounts from 1, 2, 5, or 10 parts by weight up to 50, 80, or 150 parts by weight based on the weight of the PVC.

Flame retardation may be important in these compositions when the finished article will be near open flames, sparks or hot surfaces. Examples of such uses include clothing, personal protective gear for fire department personnel, etc. PVC inherently has some flame resistance but this can be enhanced with things like phosphate esters, such as tricresyl phosphate, optionally with antimony oxide and chlorinated paraffins.

Heat stabilizers are desirable additives in the high moisture vapor transmission blends of vinyl chloride polymer with hydrophilic polyurethane. The heat stabilizers can be any of those known to the art, including metal salts or soaps of long chain fatty acids or organotin compounds. Calcium and zinc salts are also used. Lead, barium and cadmium salts are less often used. Epoxy compounds such as an epoxidized soybean oil and condensates of epichlorohydrin and bis(4-hydroxyphenyl) dimethylmethane are sometimes used as secondary stabilizers.

Other additives include fillers, pigments, calcium carbonate, titanium dioxide, anionic surfactants and the like to assist in maintaining the dispersion and reducing viscosity. Bonding agents such as isocyanates to increase adhesion to some substrates, chemical blowing agents, such as 1,1'-azobisformamide, optionally with a zinc soap to reduce the temperature range for the mechanical foaming of the PVC. Mechanical foaming of some types of PVC compositions is also possible.

The PVC can be mixed with the hydrophilic polymer (polyurethane or vinyl polymer) with any mixing method. If the PVC is to be prepared for bulk extrusion, it may be mixed/formulated in Henchel type mixers, or ribbon blenders, or in extrusion equipment. If the PVC is to be processed as a plastisol, it may be processed in a low-speed planetary mixer, high speed mixers or dissolvers, or horizontal turbomixers. It is desirable that whatever mixing system is chosen will homogeneously mix the components. It is to be noted that the hydrophilic polymer (polyurethane or vinyl polymer) can be added to the monomers used to make the PVC, it can be blended with the PVC after polymerization but before drying, or it can be blended with a plasticizer(s) and then blended with the dry PVC or a pre-plasticized PVC. The amount of hydrophilic polymer desirably is from 2, 3, 5, or 8 parts by weight to 20, 30, 40, 50, or 60 parts by weight per 100 parts by weight of said vinyl chloride polymer. Larger amounts of the hydrophilic polymer are possible, but such blends might be better described as vinyl chloride polymers modifying the hydrophilic polymer.

The final blend of vinyl chloride polymer with hydrophilic polymer can be used in any application where increased moisture vapor transmission or other effects of the hydrophilic polyurethane is desirable in the final product. These include dipped vinyl gloves, dipped gloves with textile liners, wall coverings, flooring, water barriers, industrial fabric coatings, tarpaulins, awnings, waterproof canvas constructions (e.g., tents, vehicle covers, storage areas), vinyl upholstery, vinyl vehicle components (such as dashes, armrests, consoles, etc.) etc. The hydrophilic polymer of this invention also promotes improved static dissipative behavior in the PVC coatings and films.

The following examples provide illustrations of the invention. These examples are non exhaustive and are not intended to limit the scope of the invention.

### EXAMPLES

### Chemicals Used in Examples

Bisomer™ S10W- methoxy (polyethyleneglycol) methacrylate (50% in water) available from Clariant.
Carbobond™ 26373= Hydrophobic styrene-acrylate packaging adhesive having 58 wt.% solids, a pH of 2.6, anionic emulsifier and a Tg of 5 °C available from Lubrizol Corp. in Cleveland, Ohio.
DEGDB= diethylene glycol dibenzoate which is available from Emerald Performance Materials in Akron, Ohio or Velsicol Chemical Corp.
DINP plastisol- This was a PVC plastisol made with di-isononyl phthalate plasticizer and also available from Chemionics Corp. (370CX15728 with a durometer of 80).
DINP = di-isononyl phthalate plasticizer (a good plasticizer for PVC).
DOP plastisol-This was a PVC plastisol made with di-octyl phthalate plasticizer obtained from Chemionics Corp. It had durometer values of either 74 or 60. (sold as 370CX15642 having durometer value of 74 and 370CX15629 having durometer value of 60).
IPDI = isophorone diisocyanate from Bayer Corporation.
MPEG 750 = Carbowax™ Sentry™ methoxypolyethylene glycol 750 (number average MW = 750) from The Dow Chemical Company. This is mono methoxy end-capped.
NPG DB = neopentyl glycol dibenzoate plasticizer (a good plasticizer for polyurethanes).
PEG 1450= Dihydroxyl terminated poly(ethylene oxide) of about 1450 MW.
PEO is an abbreviation for poly(ethylene oxide).
Permax™ 230 resin- This is a commercial product from Lubrizol Advanced Materials, Inc. comprising high moisture vapor transmission polyurethane (from prepolymer chains extended in water).
Permax™ 230 type prepolymer- This is a prepolymer that is used without chain extension or dispersion in water. It is endcapped with MPEG 750 instead of chain extension.
Poly G-2177/ PEG 1450 = polyethylene glycol (average MW = 1450) from Arch Chemical.
Sancure® 777= Aliphatic waterborne urethane polymer having 35 wt.% solids and a pH of 10 available from Lubrizol Corp. in Cleveland, Ohio.
Tegomer™ D-3403 = trimethylol propane monoethoxylate methyl ether (number average MW = 1,220) from Degussa-Goldschmidt.
TMP = trimethylolpropane from Celanese.

Vycar™ 577 resin- This is a plasticized vinyl chloride polymer from Lubrizol Advanced Materials, Inc. that is mostly derived from polymerizing vinyl chloride monomer with some methyl acrylate repeat units.

**Table I**

| **Formulations for Two Hydrophilic Polyurethane Prepolymers Used Later to Modify PVC** | | |
|---|---|---|
| Sample # | Prepolymer A | Prepolymer B |
| Tegomer™ D-3403 (side chain PEO) | 41.5 | 41.5 |
| PEG 1450 (in chain PEO) | 66.1 | 66.1 |
| TMP (trifunctional polyol) | 1.4 | 1.4 |
| MPEG 750 (methyl capped PEO) | 96.2 | 96.2 |
| IPDI (difunctional isocyanate) | 34.8 | 34.8 |
| DINP (plasticizer) | 160 | 0 |
| NPG DB (plasticizer) | 0 | 160 |
| Total | 400 | 400 g |

| | | |
|---|---|---|
| Tegomer™ ^{D-3403}, PEG 1450, TMP and IPDI are reacted to make a prepolymer which is capped with MPEG 750. A plasticizer is then added for viscosity control and PVC compatibility. | | |

**Table II**

| **Formulations for Hydrophilic Polyurethane Prepolymers Used Later to Modify PVC or Acrylic or Urethane** | | | | |
|---|---|---|---|---|
| | P-11 (063) | P-11 (116) | P-11 (119) | P-11 (120) |
| IPDI | 30.7 | 246.0 | 246.0 | 78.0 |
| MPEG 750 | 103.7 | 829.9 | 829.9* | 131.6 |
| TMP | 2.1 | 16.5 | 16.5 | 7.8 |
| PEG 1450 | 103.5 | 827.7 | 827.7 | 262.5 |
| DEGDB | 160 | 1280 | 1280 | 320 |
| Extra IPDI | 0 | 0 | 22.5 | 0.0 |

The P-11 was manufactured by reacting the IPDI first with the PEG 1450 with heating optionally with catalyst, then with the TMP with heating, then with the MPEG 750 with heating, and finally the any extra IPDI is added. The DEGDB is added for viscosity control and was added when needed.

**Table III**

| **Results with Vycar™ 577 Blended with Permax 230 Upright Cup MVTR Values** | |
|---|---|
| Amount of Permax™ 230 prepolymer per 100 g Vycar™ 577 and Permax™ 230 prepolymer | Upright MVTR ASTM E-96B 10-20 g/m²/24hrs |
| 0 | 26 |
| 5 | 56 |
| 10 | 156 |
| 20 | 383 |
| 40 | 462 |

**Table IV**

| **Results with Vycar™ 577 Blended with Permax 230 on Nylon Substrate Inverted Cup MVTR** | |
|---|---|
| Amount of Permax™ 230 prepolymer per 100 g Vycar™ 577 +Permax™ 230 resin | Inverted MVTR ASTM E-96B g/m²/24hrs |
| 0 | 50 |
| 5 | 1000 |
| 10 | 2200 |
| 20 | 3000 |
| 40 | 7200 |

**Table V**

| **Blends of Prepolymer A or B with Commercial Chemionics PVC Plastisols Upright Cup MVTR** | | | | |
|---|---|---|---|---|
| Parts of Urethane | 370CX15642 & Prepolymer A | 370CX15642 & Prepolymer B | 370CX15629 & Prepolymer A | 370CX15629 & Prepolymer B |
| 0 g/100 gPVC | 80 g/m²/24hrs | 80 g/m²/24hrs | 40 g/m²/24hrs | 40 g/m²/24hrs |
| 13.3 | 362 g/m²/24hrs | 125 g/m²/24hrs | 195 g/m²/24hrs | 205 g/m²/24hrs |

**Table VI**

| **Blends of Chemionics 370CX15642 Plastisol with Polyurethane Prepolymer A or Polyurethane Prepolymer B at 25.4 and 101.6 µm (1 and 4 mil) Thickness Coating, Upright Cup MVTR** | | | | |
|---|---|---|---|---|
| Parts of Urethane | 370CX15642 & Prepolymer A 25.4 µm (1 mil) coating | 370CX15642 & Prepolymer A 101.6 µm (4 mil) coating | 370CX15642 & Prepolymer B 25.4 µm (1 mil) coating | 370CX15642 & Prepolymer B 101.6 µm (4 mil) coating |
| 0 g/100 g PVC | 84 g/m²/24hrs | 84 | 84 | 84 |
| 5 | 82 | 84 | 77 | 104 |
| 10 | 79 | 128 | 192 | 84 |
| 13.3 | 97 | 180 | 126 | 125 |
| 20 | 215 | 267 | 392 | 130 |

**Table VII**

| **Blends of Chemionics 370CX15642 Plastisol with Polyurethane Prepolymer A or Prepolymer B at 25.4 and 101.6 µm (1 and 4 mil) Thickness Coating Inverted MVTR** | | |
|---|---|---|
| Parts of Prepolymer per 100 parts of Plastisol and Prepolymer | 370CX15642 & Prepolymer A 25.4 µm (1 mil) coating | 370CX15642 & Prepolymer A 101.6 µm (4 mil) coating |
| 0 g/100 g PVC | -- | -- |
| 5 | 250 | -- |
| 10 | 1400 | 280 |
| 13.3 | -- | 700 |
| 20 | 2200 | 1800 |

Test Methods ASTM E-96 BW (inverted water cup) and E-96B (upright water cup) Compound Preparation of Waterborne PVC/PU coatings. Each waterborne dispersion in the examples was prepared for testing by adding the amount of PVC emulsion (Vycar 577) required by the blend ratio to an 237 ml (8 oz.) glass jar, followed with the appropriate amount of polyurethane dispersion (Permax™ 230 polymer). This was followed by 5 grams of a suitable associative thickener such as Printrite PM in order to create a thickened knife coatable mixture. (The actual amount of dispersion and thickener varied in a range of 145-160 grams and 4.5-6.0 grams respectively in order to achieve sufficient viscosity for knife coating purposes). The mixture was stirred using a Caframo RZR50 lab stirrer equipped with a 2.54 cm (1-inch) marine impeller until thickening maximized, which normally took 10-15 minutes.

Preparation of 100% Solids PVC/PU Plastisol Compounds. Each plastisol in the examples was prepared for testing by adding approximately 150 grams of PVC plastisol to an 237 ml (8 oz.) glass jar, followed by adding the appropriate amount of hydrophilic polyurethane prepolymer of Table 1. The mixture was stirred using a Caframo RZR50 lab stirrer equipped with a 2.54 cm (1-inch) marine impeller until a uniform mixture was obtained, which normally took 10-15 minutes.

Coating of 100% Solids PVC/PU Plastisol. Each coated fabric sample was prepared using an approximate 46 cm x 25 cm (18 in. x 10 in.) swatch of Style 306A Filament Nylon 6,6 Semi-Dull Taffeta from Testfabrics Inc. The swatch was mounted and stretched on a pin frame having springs to apply tension to the fabric in the warp direction only. A thin coat (typically 8.48 to 16.95 g/m² (0.25 to 0.50 oz./yard²) of the PVC/hydrophilic PU plastisol was applied to the surface of stretched fabric using a floating/tight knife. The entire assembly (pin frame and mounted, stretched, coated swatch) was placed in a circulating air oven at 100 °C (212 °F) until dry (typically 5 to 15 minutes). The fabric (still mounted on the pin frame) was stretched over an elevated glass plate on an aluminum pin frame. A 1-2 millimeter thickness of the PVC/hydrophilic PU plastisol mixture was applied using a Bird applicator, typically by drawing the applicator over the fabric twice. The pin frame was placed again in the 100 °C (212 °F) circulating air oven and dried. The dried fabric (having coating on it) was removed from the pin frame and dried/fused further for 5 minutes at 177 °C (350 °F). The final dried test specimen (fabric with coating) typically had 50.9 to 67.8 g/m² (1.5 to 2.0 oz./yard²) of dried PVC/polyurethane coating applied.

Coating of PVC/PUD waterborne compounds. Each coated fabric sample was prepared using an approximate 46 cm x 25 cm (18 in. x 10 in.) swatch of Style 306A Filament Nylon 6,6 Semi-Dull Taffeta from Testfabrics Inc. The swatch was mounted and stretched on a pin frame having springs to apply tension to the fabric in the warp direction only. A thin coat (typically 5.09 to 6.78 g/m² (0.15 to 0.20 oz./yard²)) of the thickened PVC/polyurethane dispersion was applied to the entire available surface of stretched fabric using a floating/tight knife. The entire assembly (pin frame and mounted, stretched, coated swatch) was placed in a circulating air oven at 100 °C (212 °F) until dry (typically 5 to 15 minutes). The fabric (still mounted on the pin frame) was stretched over an elevated glass plate on an aluminum frame. A 1-2-millimeter thickness of the thickened PVC/polyurethane dispersion was applied using a Bird applicator, typically by drawing the applicator over the fabric twice. The pin frame was placed again in the 100 °C (212 °F) circulating air oven and dried. The dried fabric (having coating on it) was removed from the pin frame and dried further (including crosslinking when a crosslinking agent was used) for 5 minutes at 177 °C (350 °F). The final dried test specimen (fabric with coating) typically had 16.95 to 42.38 g/m² (0.5 to 1.25 oz/yard²) of dried PVC/ polyurethane coating.

The following procedure was used to measure rate of transmission of moisture vapor through a membrane (Moisture Vapor Transmission Rate or MVTR) for each of the dried, coated test specimens. A 118 ml (4 oz.) Ball Mason jar was filled with demineralized water to within 1.27 cm (1/2 inch) of the jar's top. The jar mouth was lightly coated with silicone grease. A 7.62 cm x 7.62 cm (3 inch x 3 inch) test specimen (larger than the diameter of the jar mouth) was placed across the greased jar mouth with the coated (using the PVC/polyurethane being tested) side of the specimen facing the inside of the jar. The test specimen was locked into place across the jar mouth using a gasketed screw top lid having a circular opening. The complete assembly (jar, water, gasket, lid and test specimen) was weighed and placed in a conditioned room (22.2 °C (72 °F) and 50 % relative humidity). A fan was used to blow air across the jar at 152.4-175.3 m (500-575 linear feet) per minute for the appropriate time interval (typically 24 hours). The jar was allowed to sit upright so that the test specimen was exposed to the moist atmosphere above the water inside the jar as a test of upright water cup MVTR. For inverted water cup testing, the jars were inverted onto a wire grid exposing the test sample to liquid water in the jar and the uncoated outside surface of the test specimen to the air flow. For both methods, the entire assembly was reweighed following the appropriate time interval, and moisture vapor transmission rate was calculated as grams of water lost per square meter of test specimen surface exposed to water vapor per unit of time (typically grams per square meter per 24 hours, or gms/m²/24 hr).

### Hydrophilic Vinyl Polymer Examples (not according to the invention) Example C (10% MPEGMA, 90% acrylic acid)

To a 3-liter three-necked flask equipped with a stirrer, reflux condenser, thermometer and nitrogen inlet tube, were added 1140 grams DM water. In a nitrogen atmosphere, the water was refluxed for half-hour to remove air. While controlling reactor temperature at 100°C, the metering of the following two mixtures was started at the same time. Monomer stream consisting of 8 grams 3-mercaptopropanoic acid, 360 grams acrylic acid, and 82 grams Bisomer S10W (ethylenically unsaturated (co-polymerizable) macromer with repeating units derived from polymerizing ethylene oxide) was metered over 2 hours. Initiator stream consisting of 4 grams sodium persulfate and 31 grams DM water was metered over 3 hours. To complete polymerization, reaction mixture was kept at 100°C for an extra 1 hour after initiator solution ran out. The obtained solution had the following properties: T.S. = 26 %, pH = 2.1, B.V. = 230 cP. Mₙ = 17,000 g/mol, PDI = 11.

### Example D (20% MPEGMA, 80% acrylic acid)

The procedure of Example C was followed with the following changes. The initial reactor charge: 1140 grams DM water, 4 grams 3-mercaptopropanoic acid. The monomer stream was 8 grams 3-mercaptopropanoic acid, 320 grams acrylic acid, and 163 grams Bisomer S10W. The obtained solution had the following properties: T.S. = 29 %, pH = 2.0, B.V. = 45 cP.

### Example E (30% MPEGMA, 70% acrylic acid)

The procedure of Example C was followed with the following changes. The initial reactor charge was 1140 grams DM water and 8 grams 3-mercaptopropanoic acid. The monomer stream was 12 grams 3-mercaptopropanoic acid, 280 grams acrylic acid, and 245 grams Bisomer S10W.

Basic formulations of PVC film, gloves and foam were made up with and without Permax P-11 added. The PVC film formula was mixed then cast @ 76.2 µm (3 mils) on release paper and gelled at 149 °C.

**TABLE VIII**

| PVC Formulations with P-11 | | | | | | | |
|---|---|---|---|---|---|---|---|
| Component | **Function** | **PVC Film Cntrl** | **PVC Film W/P-11** | **PVC Gloves Cntrl** | **PVC Gloves W/P-11** | **PVC Foam Cntrl** | **PVC Foam W/P-11** |
| Epoxidized Soybean Oil | Plasticizer | | | | | 4.0g | 4.0g |
| Di-Isononyl Phthalate | Plasticizer | 83.8g | 63.8g | | | 80g | 60g |
| Permax P-11 | Additive | | 20.0g | | 20.0g | | 20g |
| Di-Octyl Phthalate | Plasticizer | | | 74.3g | 55.75g | | |
| Byk 4040 | Air Release/Vi scosity Stabilizer | 3.4g | 3.4g | | | 3.0g | 3.0g |
| N-Butyl Acetate | CoSolvent | | | 24.75g | 24.5g | | |
| Zinc Calcium Stabilizer | Stabilizer | | | 1.98g | 1.98g | 1.5g | 1.5g |
| Geon Resin 121-A | Dispersion PVC | 112.8g | 112.8g | 99.0g | 97.8g | 71.5g | 71.5g |
| LB-110 Resin | Blending PVC | | | | | 16g | 16g |
| Marble-white Calcium Carbonate | Filler | | | | | 16g | 16g |
| Celogen Azodicarbide | Blowing Agent | | | | | 8.0g | 8.0g |

for 2 minutes and fused at 188°C for 2 minutes. The PVC Glove formula was mixed, then warmed to 40°C, cast onto release paper at 76.2 µm (3 mils), and then cured at 195 °C for 2 minutes.

The PVC Foam formula was mixed then cast @ 635 µm (25 mils) and cured at 204 °C for 5 minutes. Each formula was tested for Brookfield viscosity. Each foam was tested for thickness and Surface Resistivity. Each film was tested for MVTR, Tensile, Elongation, 100% Modulus, and Surface Resistivity.

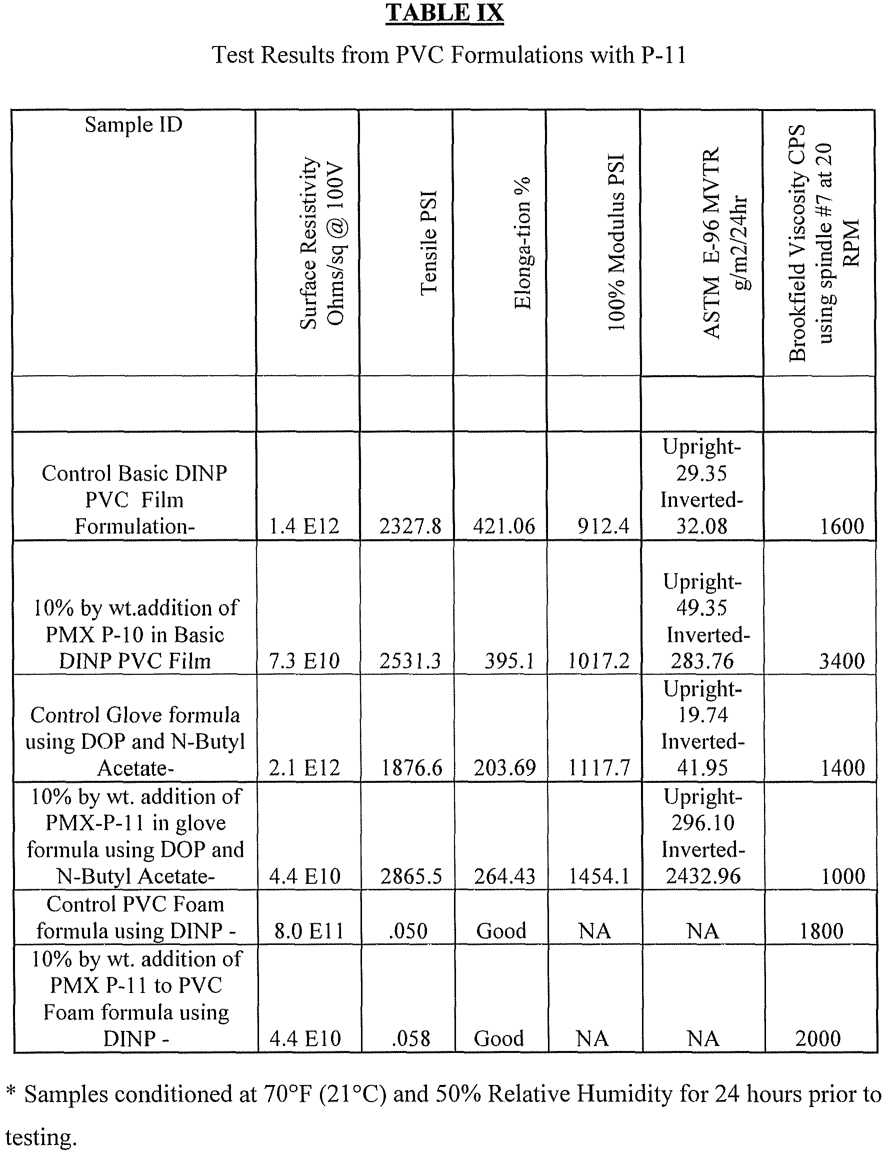

The above results show that adding Permax P-11 PVC Plastisol reduces the Surface Resistivity in all cases from the E12 range to the E10 range making the film and foam examples static dissipative. Inverted MVTR values are increased from nearly 10x to 50x with the addition of Permax P-11.

**Table X**

| Urethane and Styrene-Acrylic Formulations with P-11 and Results | | | | | |
|---|---|---|---|---|---|
| Component | Styrene-Acrylic Control | Styrene-Acrylic Sample | Styrene-Acrylic Sample | Urethane Control | Urethane Sample |
| Carbobond™ 26373 (solids + H₂O) | 100g | 90 | 85 | - | - |
| Sancure® 777 (solids + H₂O) | - | - | - | 100g | 90 |
| P-11 (116) 60% oligomer/40% plasticizer | 0 | 10 | 15 | 0 | 10 |
| Elongation to break % | 358 | 757 | 994 | 351 | 790 |
| 100% Modulus PSI | 144 | 70 | 29 | 1218 | 744 |
| Surface resistivity Ohms/sq @ 100V | >1 E+14 | 1.7 E+11 | Not tested | 2.5 E+ 11 | 5.6 E+10 |

Samples of styrene-acrylic and urethane (with and without P-11) were cast at 381 µm (15 mils), air dried 24 hours, dried at 100 °C for 3 min, then cured at 277 °C for 3 min.

### Test Methods for Hydrophilic Vinyl Polymer.

Brookfield Viscosity. Brookfield viscosity testing was performed using a Brookfield RV viscometer and spindles #3 to #6 (depending on viscosity) at 20 rpm and 25 °C (77 °F). Particle Size Measurements. The particle size and size distribution of the dispersions were obtained by Submicron Particle Sizer AutodilutePAT Model 370 (NICOMP Particle Sizing Systems) using an intensity average with Gaussian distribution.

The above hydrophilic vinyl polymers (Examples C, D, and E) could be substituted for hydrophilic polyurethane into blends with vinyl chloride polymers as were Prepolymer A and B and in the preceding vinyl chloride with polyurethane blends and similar results would be obtained.

## Claims

1. A plasticized vinyl chloride polymer film comprising:
a) at least one vinyl chloride polymer,
b) at least one plasticizer for said at least one vinyl chloride polymer, and
c) at least 2 parts by weight of a hydrophilic polyurethane polymer per each 100 parts by weight of said at least one vinyl chloride polymer,
wherein said hydrophilic polyurethane polymer is **characterized by** having at least 2 parts by weight of repeating units derived from polymerizing ethylene oxide per 100 parts by weight of said at least one vinyl chloride polymer,
wherein said hydrophilic polyurethane polymer is **characterized by** the presence of at least 10 wt. % of ethylene oxide repeat units based on the weight of said hydrophilic polyurethane polymer and at least 50 mole % of said ethylene oxide repeat units are in oxyalkenyl blocks of 500 to 10,000 grams/mole number average molecular weight,
wherein at least 5 wt.% to 35 wt.% of said ethylene oxide repeat units are in lateral side or terminal chains from said hydrophilic polyurethane polymer backbone.

2. The plasticized vinyl chloride polymer film according to claim 1, wherein said vinyl chloride polymer has at least 50 wt.% repeating units from vinyl chloride.

3. The plasticized vinyl chloride polymer film according to claim 1, on a textile backing or including fiber reinforcing material.

4. The plasticized vinyl chloride polymer film on a textile backing material according to claim 3, wherein said textile is a woven, nonwoven, or knit type of textile.

5. The plasticized vinyl chloride polymer film on a textile backing or reinforcing material according to claim 3, in the form of a wall covering, wall paper, tarpaulin, roofing membrane, awning, tent, protective clothing, bag, backpack and/or banner.

6. The plasticized vinyl chloride polymer film according to claim 1 without a textile backing made via extrusion or casting.

7. The plasticized vinyl chloride polymer film according to claim 1, wherein said at least one plasticizer is present in an amount of at least 10 parts by weight per 100 parts by weight of said at least one vinyl chloride polymer.

## Patentansprüche

1. Weichgemachte Vinylchloridpolymerfolie, umfassend:
a) wenigstens ein Vinylchloridpolymer,
b) wenigstens einen Weichmacher für das wenigstens eine Vinylchloridpolymer und
c) wenigstens 2 Gewichtsteile eines hydrophilen Polyurethanpolymers pro 100 Gewichtsteile des wenigstens einen Vinylchloridpolymers,
wobei das hydrophile Polyurethanpolymer **dadurch gekennzeichnet ist, dass** es wenigstens 2 Gewichtsteile Repetiereinheiten, die vom Polymerisieren von Ethylenoxid abgeleitet sind, pro 100 Gewichtsteile des wenigstens einen Vinylchloridpolymers aufweist,
wobei das hydrophile Polyurethanpolymer durch die Anwesenheit von wenigstens 10 Gew.-% Ethylenoxid-Repetiereinheiten, bezogen auf das Gewicht des hydrophilen Polyurethanpolymers, gekennzeichnet ist und wenigstens 50 Mol-% der Ethylenoxid-Repetiereinheiten in Oxyalkenylblöcken von 500 bis 10 000 Gramm/Mol als Zahlenmittel des Molekulargewichts vorliegen,
wobei wenigstens 5 Gew.-% bis 35 Gew.-% der Ethylenoxid-Repetiereinheiten in lateralen Seiten- oder terminalen Ketten von dem hydrophilen Polyurethanpolymergerüst vorliegen.

2. Weichgemachte Vinylchloridpolymerfolie gemäß Anspruch 1, wobei das Vinylchloridpolymer wenigstens 50 Gew.-% von Vinylchlorid stammende Repetiereinheiten aufweist.

3. Weichgemachte Vinylchloridpolymerfolie gemäß Anspruch 1 auf einem Textilträger oder Faserverstärkungsmaterial einschließend.

4. Weichgemachte Vinylchloridpolymerfolie auf einem Textilträgermaterial gemäß Anspruch 3, wobei das Textil ein Gewebe-, Vlies- oder Maschen-Textiltyp ist.

5. Weichgemachte Vinylchloridpolymerfolie auf einem Textilträger- oder -verstärkungsmaterial gemäß Anspruch 3 in Form einer Wandbedeckung, Tapete, Plane, Dachbahn, Markise, Zelt, Schutzkleidung, Tasche, Rucksack und/oder Fahne.

6. Weichgemachte Vinylchloridpolymerfolie gemäß Anspruch 1 ohne Textilträger, die durch Extrusion oder Gießen hergestellt ist.

7. Weichgemachte Vinylchloridpolymerfolie gemäß Anspruch 1, wobei der wenigstens eine Weichmacher in einer Menge von wenigstens 10 Gewichtsteilen pro 100 Gewichtsteile des wenigstens einen Vinylchloridpolymers vorhanden ist.

## Revendications

1. Film de polymère de chlorure de vinyle plastifié, comprenant :
a) au moins un polymère de chlorure de vinyle,
b) au moins un plastifiant pour ledit au moins un polymère de chlorure de vinyle, et
c) au moins 2 parties en poids d'un polymère de polyuréthane hydrophile pour 100 parties en poids dudit au moins un polymère de chlorure de vinyle,
dans lequel ledit polymère de polyuréthane hydrophile est **caractérisé en ce qu'**il contient au moins 2 parties en poids de motifs de répétition dérivés de la polymérisation de l'oxyde d'éthylène pour 100 parties en poids dudit au moins un polymère de chlorure de vinyle,
dans lequel ledit polymère de polyuréthane hydrophile est **caractérisé par** la présence d'au moins 10 % en poids de motifs de répétition d'oxyde d'éthylène sur la base du poids dudit polymère de polyuréthane hydrophile et au moins 50 % en mole desdits motifs de répétition d'oxyde d'éthylène sont dans des séquences d'oxyalcényle ayant un poids moléculaire moyen en nombre de 500 à 10 000 grammes/mole,
dans lequel au moins 5 % en poids à 35 % en poids desdits motifs de répétition d'oxyde d'éthylène se trouvent dans les chaînes latérales ou terminales du squelette dudit polymère de polyuréthane hydrophile.

2. Film de polymère de chlorure de vinyle plastifié selon la revendication 1, dans lequel ledit polymère de chlorure de vinyle contient au moins 50 % en poids de motifs de répétition provenant du chlorure de vinyle.

3. Film de polymère de chlorure de vinyle plastifié selon la revendication 1, sur un support textile ou comprenant un matériau de renforcement de fibre.

4. Film de polymère de chlorure de vinyle plastifié sur un matériau de support textile selon la revendication 3, dans lequel ledit textile est un textile tissé, non tissé ou tricoté.

5. Film de polymère de chlorure de vinyle plastifié sur un matériau de support textile ou de renforcement selon la revendication 3, sous la forme d'un revêtement mural, d'un papier peint, d'une bâche, d'une membrane de toiture, d'une marquise, d'une tente, d'un vêtement de protection, d'un sac, d'un sac à dos et/ou d'une bannière.

6. Film de polymère de chlorure de vinyle plastifié selon la revendication 1, sans support textile fait par extrusion ou coulage.

7. Film de polymère de chlorure de vinyle plastifié selon la revendication 1, dans lequel ledit au moins un plastifiant est présent en une quantité d'au moins 10 parties en poids pour 100 parties en poids dudit au moins un polymère de chlorure de vinyle.
